# EUROPÄISCHE PATENTSCHRIFT

(11) **EP 3 412 398 B1**
(45) Veröffentlichungstag und Bekanntmachung des Hinweises auf die Patenterteilung: **29.07.2020**
(21) Anmeldenummer: 18174827.8
(22) Anmeldetag: 29.05.2018
(51) Int. Cl.: B23K 11/00, B23K 11/14, B23K 11/36

(54) **ELEKTRODE ZUM WIDERSTANDSSCHWEISSEN MIT EINEM VENTILKÖRPER**
ELECTRODE FOR USE IN RESISTANCE WELDING WITH A VALVEBODY
ÉLECTRODE POUR SOUDAGE PAR RÉSISTANCE AVEC UN CORPS DE VALVE

(30) Priorität: 29.05.2017 DE 102017111633
(43) Veröffentlichungstag der Anmeldung: 12.12.2018
(73) Patentinhaber: Doceram GmbH, 44309 Dortmund (DE)
(72) Erfinder: DÜMPELMANN, Christian, 58739 Wickede (DE); FÜRDERER, Tobias, 59425 Unna (DE)
(74) Vertreter: Rätsch, Caroline

(56) Entgegenhaltungen:
- DE-C- 933 045
- DE-T2- 69 733 783
- JP-A- H02 235 584
- JP-A- 2017 006 982

## Beschreibung

Die Erfindung betrifft eine Elektrode zum Widerstandsschweißen von Bolzen gemäß dem Oberbegriff des Anspruchs 1 (siehe z.B. JP H02/235584 A).

Verfahren zum Widerstandsschweißen von Bolzen auf einem Blech sind aus dem Stand der Technik gut bekannt. Dabei wird eine Elektrode eingesetzt, die einen Hohlraum und einen Zugang in Form einer Öffnung für den Bolzen bereitstellt. Ein typischer Bolzen verfügt dabei über einen Kopf und einen Stift. Der Kopf dient zur Auflage auf dem Blech. Er wird mit dem Blech verschweißt. Der Stift kann glatt ausgebildet sein oder über ein Außengewinde oder ein Innengewinde verfügen.

Zum Verschweißen des Bolzens mit dem Blech kommt zum Beispiel das Widerstandschweißen zum Einsatz. Dabei wird das Blech auf das Oberteil der Elektrode aufgelegt. Der Bolzen wird mit seinem Stift durch eine Bohrung des Bleches gesteckt und teilweise in der Elektrode aufgenommen. Anschließend drückt eine Oberelektrode den Bolzen weiter in die Elektrode hinein, und zwar so weit, bis der Kopf des Bolzens zur Auflage auf dem Blech gelangt. Dabei wird eine elektrische Verbindung zwischen der Oberelektrode, dem Bolzen, dem Blech und der Elektrode hergestellt. Aufgrund des Spannungsabfalls zwischen dem Bolzenkopf und dem Blech entsteht eine starke Wärmeentwicklung, die das Verschweißen des Bolzens mit dem Blech bewirkt.

Das Widerstandsschweißen hat sich insbesondere in der Automobilindustrie, aber auch in anderen Industriezweigen, grundsätzlich bewährt. Allerdings kann es dazu kommen, dass Rückstände des während des Schweißvorgangs geschmolzenen Materials zu einer Verunreinigung der Elektroden führen. Es ist daher eine ständige Reinigung der Elektroden erforderlich. Geschieht dies nicht, nimmt die Leistung der Elektrode nach und nach ab, was zu erheblichen Qualitätseinbußen hinsichtlich der Schweißverbindung führt.

Zur Überwindung dieses Nachteils ist es aus dem Stand der Technik bekannt, die Elektrode mit einem Druckluftanschluss zu versehen. Über den Druckluftanschluss wird während des Schweißvorgangs Druckluft in die Elektrode eingeleitet und der Schweißstelle zugeführt. Geschmolzenes Material wird dabei vom Luftstrom mitgerissen und von der Elektrode und der Schweißstelle entfernt.

Aus der Praxis sind im Zusammenhang mit der Druckluftbeaufschlagung zwei Verfahren bekannt. Bei dem ersten Verfahren findet eine ständige Einleitung von Druckluft auch dann statt, wenn nicht geschweißt wird. Dies hat den Nachteil, dass einerseits Druckluft verschwendet wird, was das Verfahren wenig wirtschaftlich macht. Andererseits kann es dazu kommen, dass aufgrund der andauernden Entweichung der Druckluft der Bolzen vor dem Schweißvorgang aus der Elektrode herausgeblasen wird. Eine korrekte und fehlerfreie Positionierung des Bolzens ist dann nicht möglich.

Bei dem anderen Verfahren wird die Druckluftbeaufschlagung durch eine Steuerelektronik gesteuert. Die Steuerelektronik sorgt für eine Synchronisierung zwischen dem Herunterdrücken der Oberelektrode zur Einleitung des Schweißvorganges und der Einleitung der Druckluft.

Die Steuerelektronik ist jedoch kompliziert und teuer, und der Wartungsaufwand ist hoch.

Ausgehend von den vorbeschriebenen Nachteilen des Standes der Technik liegt der Erfindung die **Aufgabe** zugrunde, eine Elektrode zu schaffen, bei denen geschmolzenes Material in einfacher und effektiver Weise aus dem Schweißbereich entfernt werden können.

Eine Elektrode zum Widerstandsschweißen gemäß der Erfindung ist im Anspruch 1 definiert.

Der Ventilkörper befindet sich bei anliegendem Gasdruck in einer geschlossenen Ventilposition. Dabei kann das in den Hohlraum der Elektrode eingeleitete Gas nicht durch die Öffnung im Oberteil der Elektrode entweichen. Erst durch Einwirkung des Bolzens wird der Ventilkörper in eine geöffnete Ventilposition bewegt. Bei der Entnahme des Bolzens, wird der Ventilkörper durch den anliegenden Gasdruck wieder automatisch in seine geschlossene Ventilposition zurückbewegt. Hierdurch wird der Schweißstelle nur während des eigentlichen Schweißvorgangs Gas zur Entfernung von geschmolzenem Material zugeleitet. Ansonsten ist die Gaszufuhr durch den Ventilkörper unterbrochen.

Erfindungsgemäß kann die Öffnung durch den Ventilkörper strömungstechnisch verschlossen werden. Strömungstechnisch bedeutet in diesem Zusammenhang, dass die Öffnung durch den Ventilkörper unmittelbar oder mittelbar verschlossen werden kann. Bei einem unmittelbaren Verschließen deckt der Ventilkörper die Öffnung unmittelbar ab. Bei einem mittelbaren Verschließen der Öffnung verschließt der Ventilkörper die Öffnung indirekt. Dies bedeutet, dass der Strömungsweg des Gases durch die Öffnung hindurch durch den Ventilkörper unterbrochen wird, ohne dass der Ventilkörper die Öffnung unmittelbar schließen muss.

Durch die Erfindung kann der Gasverbrauch gegenüber dem Stand der Technik wesentlich reduziert werden. Darüber hinaus ist die erfindungsgemäße Elektrode nicht auf den Einsatz einer aufwändigen Steuerelektronik angewiesen. Diese kann vielmehr vollständig entfallen.

Gemäß einem bevorzugten Merkmal der Erfindung ist der Ventilkörper als dreidimensionaler Formkörper ausgebildet. Er besteht vorzugsweise aus einem vergleichsweise harten und schlagfesten Material. Besonders bevorzugt ist er aus Stahl gebildet. Der Ventilkörper ist derart geformt, dass er im Inneren des Hohlraumes bewegbar ist. Vorzugsweise ist er dabei als Kugel ausgebildet. Hierdurch wird verhindert, dass sich der Ventilkörper im Hohlraum verkantet. Insbesondere bei einer besonders bevorzugten Ausgestaltung als Stahlkugel ist sichergestellt, dass der Ventilkörper auch bei langer Einsatzdauer seine vorteilhafte Form beibehält.

Erfindungsgemäß einsetzbare Bolzen sind aus einem elektrisch leitfähigen Material, vorzugsweise einem Metall gebildet. Sie weisen einen Bolzenkopf und einen sich daran anschließenden, vorzugsweise zylindrischen, Bolzenstift auf. Der Bolzenstift kann über ein Gewinde verfügen. Dies kann sowohl ein Innengewinde als auch ein Außengewinde sein. Bolzen mit Gewinde umfassen dabei insbesondere die Produktklasse der Schrauben. Die erfindungsgemäße Elektrode ist für alle Arten von Bolzen geeignet. Überwiegende Verwendung findet sie beim Widerstandsschweißen von Schrauben auf Blechen.

Erfindungsgemäß verfügt das Unterteil der Elektrode über einen Gasanschluss zur Einleitung eines unter Druck stehenden Gases. Vorzugsweise handelt es sich dabei um Druckluft. Druckluft hat den Vorteil, dass es vergleichsweise inert und in großen Mengen verfügbar ist. Alternativ kann der Gasanschluss auch der Einleitung eines Schutzgases dienen. Insbesondere beim Schweißen von hochlegierten Stählen ist die Verwendung von Schutzgas von Vorteil. Letzteres kann beispielsweise Stickstoff und/oder Argon aufweisen.

Erfindungsgemäß sind das Oberteil und das Unterteil der Elektrode verbindbar ausgebildet und stellen im verbundenen Zustand einen gemeinsamen Hohlraum bereit. Dabei sind beide Teile aus einem elektrisch leitenden Material gebildet, insbesondere aus Kupfer oder einer Kupferlegierung. Das Kupfer bzw. die Kupferlegierung stellt eine gute elektrische und Wärmeleitfähigkeit zu Verfügung, was für den Schweißprozess vorteilhaft ist.

Vorteilhafterweise weisen das Oberteil und das Unterteil jeweils an ihren einander zugewandten Seiten Verbindungsmittel auf. Die Verbindung zwischen Oberteil und Unterteil ist vorzugsweise lösbar ausgebildet.

Es ist insbesondere vorgesehen, dass das Oberteil der Elektrode austauschbar mit dem Unterteil verbunden werden kann. Bei dem Schweißvorgang liegt das Blech auf dem Oberteil der Elektrode auf. Das Oberteil ist daher besonderer Belastung ausgesetzt und neigt zu Verschleiß. Es ist daher von Vorteil, wenn das Oberteil der Elektrode unabhängig von dem weniger belasteten Unterteil ausgetauscht werden kann. Insoweit spricht man bei dem Oberteil auch von einer Wechselelektrode.

Vorzugsweise sind die Verbindungsmittel als Schraubmittel ausgebildet. Dann stehen das Oberteil und das Unterteil vorzugsweise in Gewindeeingriff miteinander. Der Gewindeeingriff gestattet eine stabile Verbindung von Ober- und Unterteil.

Alternativ ist die Verbindung zwischen beiden Teilen als Bajonettverschluss ausgebildet. Ein solcher Verschluss ist mit einfachen Mitteln zu konstruieren und in der Handhabung unkompliziert.

Vorzugsweise sind/ist das Oberteil und/oder das Unterteil wenigstens bereichsweise mit einer eckigen, vorzugsweise sechseckigen, Kontur ausgebildet. Das Befestigen und das Lösen des Oberteils kann dadurch mit herkömmlichen Werkzeugen wie zum Beispiel einem Schraubenschlüssel vorgenommen werden.

Erfindungsgemäß ist der Ventilkörper in dem Hohlraum angeordnet. Dies hat den Vorteil, dass die Regelung des Gasstroms mit einfachen Mitteln unmittelbar in der Elektrode erfolgen kann. Es ist dabei vorzugsweise vorgesehen, dass der Ventilkörper im Hohlraum geführt ist. Dies verringert die Bewegungsmöglichkeiten des Ventilkörpers innerhalb des Hohlraums und führt dadurch zu einem schnelleren Umschalten von der geschlossenen zur geöffneten Ventilposition und umgekehrt.

Weiter bevorzugt ist der Ventilkörper dabei ohne mechanische Vorspannung geführt. Der Ventilkörper wird ausschließlich durch den anliegenden Gasdruck in seiner geschlossenen Position gehalten. Hierdurch kann in vorteilhafter Weise auf zusätzliche mechanische Elemente, wie insbesondere Federelemente, verzichtet werden. Dies führt im Ergebnis zu einer Konstruktion mit wenigen Teilen, die sehr wartungsarm betreibbar ist.

Gemäß einem bevorzugten Merkmal der Erfindung ist im Inneren der Elektrode ein Strömungsweg für das eingeleitete Gas definiert. Dieser erstreckt sich ausgehend vom Gasanschluss am Unterteil der Elektrode über den Hohlraum bis zur Öffnung am Oberteil der Elektrode. Der Strömungsweg dient erfindungsgemäß dazu, das unter Druck stehende Gas der Öffnung zuzuleiten und überschüssiges geschmolzenes Material und ggf. Zunder während des Schweißvorgangs wegzublasen. Vorzugsweise ist der Ventilkörper dabei in dem Strömungsweg angeordnet. Hierdurch kann der Ventilkörper allein durch den anliegenden Gasdruck in seiner geschlossenen Position gehalten werden. In dieser Position verschließt der Ventilkörper die Öffnung des Oberteils vorzugsweise gasdicht.

In dem Hohlraum ist gemäß der Erfindung eine Isolierhülse angeordnet. Die Isolierhülse besteht vorzugsweise aus einem elektrisch isolierenden Material. Sie kann dazu dienen, einen elektrischen Kontakt zwischen der Elektrode und dem während des Schweißvorgangs in den Hohlraum eintauchenden Bolzen zu verhindern. Ansonsten bestünde die Gefahr eines Kurzschlusses zwischen dem Bolzen und der Elektrode.

Gemäß der Erfindung dient die Isolierhülse der Führung des Ventilkörpers. Dabei verläuft der Strömungsweg vorzugsweise durch die Isolierhülse. Zur Führung des Ventilkörpers weist die Isolierhülse vorteilhaft einen innenliegenden Führungsabschnitt auf. Der Führungsabschnitt weist vorzugsweise einen zylindrischen Querschnitt auf. Hierdurch kann der Ventilkörper besonders vorteilhaft geführt werden. Dies gilt vor allem dann, wenn der Ventilkörper eine Kugel ist.

Der Führungsabschnitt ist vorzugsweise im Unterteil der Elektrode angeordnet. Hierdurch kann das freie Ende des Bolzenstifts im bestimmungsgemäßen Verwendungsfall vor der Einleitung des Schweißvorgangs bereits in das Innere des Oberteils der Elektrode eingeführt werden. Dieser Bereich ist im geschlossenen Zustand des Ventils strömungsfrei. Die aus dem Stand der Technik bekannte Problematik, dass der Bolzen während der Vorbereitung aus der Elektrode herausgeblasen wird, ist mit der Erfindung verhindert. Insoweit wird es als vorteilhaft angesehen, wenn die Isolierhülse einen Ventilsitz bildet, der mit Abstand zu der Öffnung (des Oberteils) angeordnet ist. Der Ventilsitz wirkt mit dem Ventilkörper zusammen.

Gemäß einem bevorzugten Merkmal der Erfindung bildet die Isolierhülse eine Hülsenöffnung, die einen gegenüber dem Führungsabschnitt verringerten Innendurchmesser aufweist. In dem Führungsabschnitt ist der Ventilkörper geführt. Dadurch, dass die Hülsenöffnung einen kleineren Innendurchmesser aufweist, kann der Ventilkörper die Hülsenöffnung verschließen. Der im Führungsabschnitt geführte Ventilkörper wird bei anliegendem Gasdruck in Strömungsrichtung gegen die Hülsenöffnung gedrückt und verschließt diese strömungstechnisch. Hierzu ist der Gasanschluss vorzugsweise in Strömungsrichtung vor der Hülse angeordnet.

Vorzugsweise fluchten die Öffnung des Oberteils der Elektrode und die Hülsenöffnung. Insbesondere ist es vorteilhaft, wenn die Öffnung des Oberteils und die Hülsenöffnung koaxial zueinander ausgerichtet sind. Das freie Ende des Bolzenstifts wird in diesem Fall in gerader Richtung auf den Ventilkörper geführt. Vorteilhafterweise führt ein Herunterdrücken des Bolzens durch die Oberelektrode gleichzeitig zu einer Bewegung des Ventilkörpers. Hierdurch wird die ohnehin notwendige Bewegung des Bolzens in einfacher und synergetischer Weise dazu genutzt, um die Hülsenöffnung und damit auch die Öffnung des Oberteils zu freizugeben. Zusätzliche Mechanismen sind nicht erforderlich.

Gemäß einer Weiterbildung der Erfindung stellt die Isolierhülse zur Ausbildung der Hülsenöffnung innenseitig einen umlaufenden Kragen bereit. Vorzugsweise ist der Kragen dabei vollständig umlaufend ausgebildet und verjüngt sich zweckmäßig nach innen. In seiner geschlossenen Position wirkt der Ventilkörper dabei mit dem Kragen zusammen. Im bestimmungsgemäßen Einsatz wird der Ventilkörper, insbesondere die Stahlkugel, durch den anliegenden Gasdruck gegen den Kragen gedrückt und verschließt dadurch die Hülsenöffnung. Vorzugsweise weist der Kragen eine abgeschrägte Anschlagfläche auf. Die Anschlagfläche verjüngt sich vorzugsweise in Richtung der Öffnung des Oberteils. Sie ist vorteilhafterweise konisch ausgebildet. Hierdurch ist insbesondere für einen kugelförmigen Ventilkörper eine besonders vorteilhafte Abdichtung geschaffen.

Gemäß einem bevorzugten Merkmal der Erfindung ist die Isolierhülse aus einem Kunststoff gebildet. Sie kann dabei beispielsweise aus Polypropylen (PP) oder Acrylnitril-Butadien-Styrol (ABS) gebildet sein. Auch andere Kunststoffe sind denkbar. Als besonders vorteilhaft wird ein faserverstärkter Kunststoff (Composit) angesehen. Der Vorteil eines Kunststoffs liegt darin, dass sich in Kombination mit einem harten Ventilkörper, insbesondere einem Ventilkörper aus Metall oder Keramik, eine gute Abdichtung erzielen lässt.

In wesentlicher Weiterbildung der Erfindung weist die Elektrode ein Führungselement zur Führung des Bolzens in der Elektrode auf. Das Führungselement dient dazu, den Bolzen (bzw. dessen Stift) aufzunehmen und insbesondere während des Schweißens einen Kontakt zwischen dem Bolzen und der Elektrode zur Vermeidung eines Kurzschlusses zu verhindern. Das Führungselement ist vorzugsweise im Hohlraum der Elektrode angeordnet. Der Strömungsweg verläuft vorteilhaft durch das Führungselement. Hierzu weist das Führungselement einen vorzugsweise zylindrischen Kanal auf. Um im Hohlraum einen bevorzugten linearen Führungsweg bereitzustellen, fluchtet der Kanal mit der Öffnung des Oberteils der Elektrode und der Hülsenöffnung. Hierdurch kann sich der Bolzen, wenn er in die Elektrode eingeführt ist, auf dem Ventilkörper abstützen. Dies ermöglicht ein vorheriges Einsetzen in die Elektrode, wobei der Bolzen innerhalb des Führungselements verbleibt. Etwaige Halte- und/oder Greifvorrichtungen sind obsolet.

Gemäß einer ersten Ausgestaltung kann das Führungselement von der Isolierhülse bereitgestellt sein. Vorzugsweise ist das Führungselement dabei einstückig mit der Isolierhülse ausgebildet. Das Führungselement ist in diesem Fall durch den Teil der Isolierhülse gebildet, der sich in Strömungsrichtung an die Hülsenöffnung anschließt. Er ist damit zwischen Hülsenöffnung und Öffnung des Oberteils der Elektrode angeordnet. Ein solches Bauteil kann in einfacher und massenproduktionstauglicher Weise hergestellt werden und ist entsprechend günstig verfügbar.

Alternativ ist das Führungselement als separates Bauteil ausgebildet. Eine derartige Ausgestaltung hat mehrere Vorteile. So können die Isolierhülse und das Führungselement aus unterschiedlichen Materialien gebildet sein, wie es als vorteilhaft angesehen wird. Es ist dadurch möglich, das Führungselement mit besonderen Eigenschaften auszustatten. Vorzugsweise ist das Führungselement aus einem keramischen Material gebildet. Diese Materialien sind korrosions-, abrasiv- und temperaturbeständig. Darüber hinaus ist eine Keramikhülse nicht elektrisch leitend.

Unmittelbar an der Öffnung des Oberteils der Elektrode befindet sich bei bestimmungsgemäßem Einsatz die Schweißstelle. Hierdurch ist das Führungselement sehr hohen Temperaturen und den korrosiven Einflüssen des Schweißens ausgesetzt. Darüber hinaus sind die den Kanal definierenden Innenwände des Führungselements einer vergleichsweise großen mechanischen Belastung durch die darin geführten Bolzen ausgesetzt. Insbesondere Schrauben sind in dieser Hinsicht anspruchsvoll, da das Außengewinde für besonders starken Abrieb sorgt. Ein keramischer Werkstoff bietet daher gegenüber einer Ausgestaltung aus Kunststoff wesentliche Vorteile. Als keramischer Werkstoff kommen insbesondere Hochleistungskeramiken in Betracht. Diese bieten besonders vorteilhafte Eigenschaften hinsichtlich thermischer Beständigkeit und Abriebbeständigkeit. Bevorzugt sind dabei Keramiken auf Aluminiumoxid-, Zirconiumoxid-, Titanoxid- oder Siliciumoxid-Basis. Auch Mischkeramiken aus Aluminium- und Zirconiumoxid, insbesondere als ATZ (alumina toughened zirconia) oder ZTA (zirconia toughened alumina) sind einsetzbar. Auch bevorzugt sind Siliciumnitrid-Keramiken (Si₃N₄) oder Y-PSZ-Keramiken (Yttrium partially stabilized Zirconia). Es wurde gefunden, dass diese Keramiken für die geforderten Anforderungen hinsichtlich Temperatur-, Abrasions- und Korrosionsbeständigkeit sowie der elektrischen Isolierung besonders geeignet sind.

Vor diesem Hintergrund wird es als vorteilhaft angesehen, wenn das Führungselement daher als Keramikhülse ausgebildet ist. Sie stützt sich dabei unmittelbar auf der Isolierhülse ab. Hierdurch wird das Führungselement von der Isolierhülse in Position gehalten. Andererseits verstärkt das Führungselement die Hülsenöffnung, insbesondere den umlaufenden Kragen gegenüber der Krafteinwirkung des Ventilkörpers. Dies ist insbesondere dann vorteilhaft, wenn das Führungselement aus Keramik gebildet ist. Es besteht insofern ein positiver Effekt, wenn die Isolierhülse aus Kunststoff und das Führungselement aus Keramik besteht.

Vorzugsweise ist der Innendurchmesser des Kanals maximal so groß wie der Innendurchmesser der Hülsenöffnung. Hierdurch wird die Isolierhülse geschützt, was insbesondere dann vorteilhaft ist, wenn die Isolierhülse aus einem weicheren Material ausgebildet ist, wie es als vorteilhaft angesehen wird. Der Kragen kann insoweit aus einem vergleichsweise weichen Material gebildet sein, welches über eine hervorragende Dichtwirkung verfügt. Die notwendige mechanische Stabilität wird von dem Führungselement bereitgestellt.

Alternativ oder zusätzlich ist der Innendurchmesser des Kanals vorzugsweise kleiner als die Öffnung des Oberteils. Der Bolzen wird dann vorteilhaft ausschließlich durch das Führungselement geführt. Zum einen kommt dadurch der Stift des Bolzens nicht in Kontakt mit der Elektrode (was einen Kurzschluss bedeuten würde). Zum anderen kann das Führungselement aus einem verschleißfesten Material wie zum Beispiel Keramik ausgebildet werden, so dass insgesamt eine langlebige Konstruktion geschaffen wird.

Mit der Erfindung kann ein Verfahren zum Widerstandsschweißen von Bolzen auf einem Blech realisiert werden, wobei der Bolzen durch das Blech hindurch in einer ersten Bewegungsrichtung in eine Elektrode eingeführt wird, und wobei während des Schweißvorgangs ein unter Druck stehendes Gas entgegen der ersten Bewegungsrichtung aus der Elektrode entweicht.

Bei einer vorteilhaften Ausgestaltung des Verfahrens wird mittels des Bolzens ein Ventil innerhalb der Elektrode geöffnet, durch das das Gas aus der Elektrode entweicht.

Bei bestimmungsgemäßem Gebrauch der Elektrode wird ein unter Druck stehendes Gas in den Hohlraum der Elektrode eingeleitet. Im Inneren der Elektrode ist dabei ein Strömungsweg definiert. Dieser erstreckt sich vom Gasanschluss des Unterteils der Elektrode über den gemeinsamen Hohlraum bis zur Öffnung des Oberteils der Elektrode. Durch den im Hohlraum angeordneten Ventilkörper wird der Strömungsweg unterbrochen, sofern kein Bolzen in der Elektrode aufgenommen ist. Das Ventil ist bevorzugt derart ausgebildet, dass der Ventilkörper durch den anliegenden Gasdruck in einer geschlossenen Ventilposition gehalten ist. Wird das freie Ende des Bolzenstifts zum Schweißen in den Hohlraum gedrückt, wird ein Kontakt zwischen Bolzen und Ventilkörper hergestellt. Der Ventilkörper wird mittels des Bolzens in eine geöffnete Ventilposition bewegt. Hierdurch wird der Schweißstelle nur während des eigentlichen Schweißvorgangs Gas zur Entfernung von geschmolzenem Material und ggf. Zunder zugeleitet. Im Übrigen ist die Gaszufuhr durch den Ventilkörper unterbrochen. Durch die erfindungsgemäße Ausgestaltung ist der Gasverbrauch gegenüber aus dem Stand der Technik bekannten Ausgestaltungen wesentlich reduziert. Darüber hinaus ist die erfindungsgemäße Ausgestaltung nicht auf den Einsatz einer aufwändigen Steuerelektronik angewiesen. Diese kann vielmehr vollständig entfallen.

Gemäß einem bevorzugten Verfahrensmerkmal wird der Ventilkörper zur Öffnung des Strömungsweges von dem freien Ende des Bolzenstifts in einer ersten Bewegungsrichtung verschoben. Die erste Bewegungsrichtung ist dabei der Strömungsrichtung des austretenden Gases entgegengesetzt. Das erfindungsgemäße Ventil ist unter Einbeziehung des anliegenden Gasdrucks mithin als Rückschlagventil konzipiert. Wird der Bolzen nach Beendigung des Schweißvorganges wieder aus der Elektrode entfernt, schlägt der Ventilkörper getrieben vom anliegenden Gasdruck wieder zurück in seine geschlossene Position. Das Ventil wird also durch das unter Druck stehende Gas geschlossen gehalten, sofern kein Bolzen auf das Ventil einwirkt.

Erfindungsgemäß entweicht ein Gas aus der Elektrode. Das Gas wird dabei vom Unterteil der Elektrode ausgehend in das Innere der Elektrode eingeleitet. Vorzugsweise wird dabei Druckluft eingeleitet. Druckluft hat den Vorteil, dass es nicht übermäßig reaktiv ist und in großen Mengen vergleichsweise günstig bezogen werden kann. Alternativ wird ein unter Druck stehendes Schutzgas in die Elektrode eingeleitet. Insbesondere beim Schweißen von hochlegierten Stählen ist die Verwendung von Schutzgas von Vorteil. Besonders bevorzugt handelt es sich bei dem Schutzgas um Stickstoff oder Argon. Vorzugsweise beträgt der Gasdruck im Inneren der Elektrode im geschlossenen Zustand des Ventils zwischen 1 bar und 30 bar, vorzugsweise zwischen 1 bar und 8 bar, besonders bevorzugt zwischen 1 bar und 3 bar. Dies hat sich in Verbindung mit dem erfindungsgemäß verwendeten Ventilkörper als besonders vorteilhaft erwiesen. Hierdurch kann einerseits die gewünschte Reinigungsleistung erreichet werden. Andererseits ist die erforderliche Kraft in diesem Bereich den technischen Gegebenheiten der Oberelektrode zur Betätigung des Ventils angepasst.

Gemäß einer bevorzugten Ausführungsform der Erfindung wird der Bolzen mit seinem freien Ende in Kontakt mit den Ventilkörper gebracht. Hierdurch kann vorrichtungsseitig auf Halte- und/oder Greifelemente an der Oberelektrode verzichtet werden.

Nach Beendigung des Schweißvorgangs wird der Bolzen aus der Elektrode entfernt. Dabei wird vorzugsweise der geöffnete Strömungsweg mittels des Ventils durch den anliegenden Gasdruck verschlossen. Hierdurch ist sichergestellt, dass auch nach dem Schweißvorgang kein Gas verschwendet wird.

Nachfolgend wird die Erfindung anhand eines Ausführungsbeispiels im Zusammenhang mit der anhängenden **Zeichnung** näher erläutert. In der Zeichnung zeigen
- Figur 1: eine Elektrode gemäß der Erfindung mit geschlossenem Ventil in schematischer Schnittdarstellung;
- Figur 2: eine Elektrode gemäß der Erfindung mit geöffnetem Ventil in schematischer Schnittdarstellung;
- Figur 3: eine Elektrode gemäß der Erfindung nach Figur 2, mit Oberelektrode und Blech.

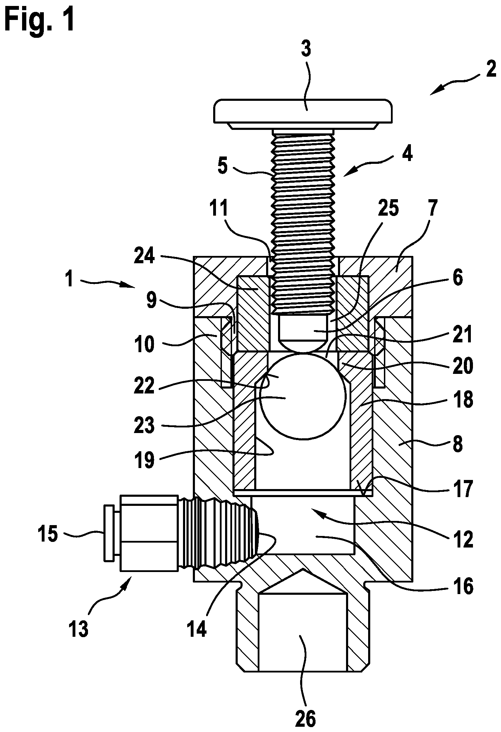

Figur 1 zeigt ein Ausführungsbeispiel der erfindungsgemäßen Elektrode 1 in einer schematischen Schnittdarstellung. Es sei darauf hingewiesen, dass bei der folgenden Figurenbeschreibung Bauteile mit denselben oder ähnlichen Funktionen aus Übersichtsgründen mit denselben Bezugsziffern versehen werden, auch wenn sie im Detail voneinander abweichen. Ortsangaben wie z.B. "oben", "unten", "seitlich" oder "hinten" beziehen sich auf eine aufrechte Elektrode 1, wie sie beim Widerstandsschweißen verwendet wird und abgebildet ist.

Gezeigt ist eine Elektrode 1 und ein Bolzen 2. Der Bolzen 2 ist vorliegend als Schraube ausgebildet. Sie verfügt über einen Schraubenkopf 3 und einen Schraubenstift 4, der sich unmittelbar an den Schraubenkopf 3 anschließt.

Der Schraubenstift 4 verfügt über ein Gewinde 5. Das Gewinde 5 ist als Außengewinde ausgebildet. Darüber hinaus weist der Schraubenstift 4 ein freies Ende 6 auf. Das freie Ende 6 ist endseitig konisch zulaufend ausgebildet. Die Schraube besteht vorliegend aus Metall, insbesondere aus Stahl.

Die Elektrode 1 weist ein Oberteil 7 und ein Unterteil 8 auf. Beide Teile bestehen aus Kupfer oder einer Kupferlegierung. Das Oberteil 7 und das Unterteil 8 sind verbindbar miteinander ausgebildet. Zu diesem Zweck weisen sie jeweils einen Befestigungsabschnitt 9, 10 auf. Der Befestigungsabschnitt 9 des Oberteils 7 weist ein Außengewinde auf. Der Befestigungsabschnitt 10 des Unterteils 8 weist ein korrespondierendes Innengewinde auf. Das Oberteil 7 und das Unterteil 8 sind vorzugsweise miteinander verschraubbar. Dadurch sind beide Teile 7, 8 voneinander lösbar und können bei Bedarf ausgetauscht werden.

Das Oberteil 7 weist in seiner Oberseite eine zentrale Öffnung 11 auf. Die Öffnung 11 bietet einen Zugang zu einem zwischen dem Oberteil 7 und dem Unterteil 8 ausgebildeten Hohlraum 12 für den Bolzen 2. Der Querschnitt des Hohlraums 12 ist vorzugsweise zylindrisch ausgebildet.

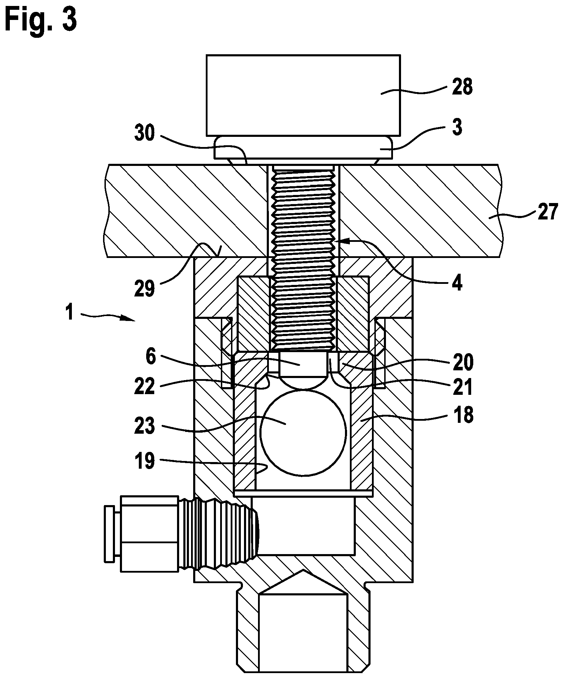

Das Unterteil 8 stellt an seiner linken Seite einen Druckluftanschluss 13 bereit. Der Druckluftanschluss 13 verfügt über einen Luftauslass 14 und einen Lufteinlass 15. Der Luftauslass 14 ragt dabei in einen unteren, freien Abschnitt 16 des Hohlraums 12 hinein. Ausgehend vom Druckluftanschluss 13, über den Hohlraum 12 bis zur Öffnung 11 ist ein Strömungsweg im Inneren der Elektrode 1 definiert. Auf diesem Weg wird die Druckluft durch die Öffnung 11 der Schweißstelle zugeführt, welche im Detail in Figur 3 dargestellt ist.

Der Querschnitt des freien Abschnitts 16 weist einen geringeren Innendurchmesser auf als der übrigen Hohlraum 12. Hierdurch bildet der Abschnitt 16 eine Auflagefläche 17, die beispielsweise zum Abstützen einer Isolierhülse 18 dient. Letztere ist im vom Unterteil 8 bereitgestellten Teil des Hohlraums 12 angeordnet. Die Isolierhülse weist einen Führungsabschnitt 19 und einen umlaufenden Kragen 20 auf. Der umlaufende Kragen 20 definiert eine Hülsenöffnung 21. Die Hülsenöffnung 21 weist einen geringeren Innendurchmesser auf als der Führungsabschnitt 19. Der Kragen 20 weist eine umlaufende, konisch zulaufende Anschlagfläche 22 auf. Die Isolierhülse 18 ist vorliegend aus einem Kunststoff, beispielsweise aus Polypropylen gebildet.

Die Isolierhülse 18 nimmt mit ihrem Führungsabschnitt 19 einen Ventilkörper auf. Der Ventilkörper ist vorliegend als Stahlkugel 23 ausgebildet. Er ist vorzugsweise in der Isolierhülse aufgenommen. Die Stahlkugel 23 und die Isolierhülse 18 bilden vorteilhaft ein Ventil im Inneren der Elektrode 1. In Figur 1 dargestellt ist die Elektrode 1 in einem geschlossenem Zustand des Ventils. Dabei wird die Druckluft entlang des Strömungswegs in die Elektrode 1 geleitet. Durch den anliegenden Luftdruck wird die Stahlkugel 23 gegen die Anschlagfläche 22 des Kragens 20 gedrückt und verschließt dadurch die Hülsenöffnung 21. Der Durchmesser der Stahlkugel 23 ist so bemessen, dass sie die Hülsenöffnung 21 nicht passieren kann. Der Strömungsweg im Inneren der Elektrode ist dadurch unterbrochen. Im geschlossenen Zustand des Ventils kann keine Druckluft aus der Hülsenöffnung 21, und damit auch nicht aus der Öffnung 11, austreten.

Oberhalb der Isolierhülse 18 ist ein Führungselement in Form einer Keramikhülse 24 angeordnet. Die Keramikhülse 24 dient der Führung der Schraube 2. Vorrangige Aufgabe ist es dabei, einen Kontakt zwischen Schraubenstift 4 und der Innenwand des Oberteils 7 der Elektrode 1 zu verhindern. Hierzu stellt die Keramikhülse einen Kanal 25 bereit, der mit der Hülsenöffnung 21 und Öffnung 11 des Oberteils 7 vorteilhaft fluchtet. Es wird also eine lineare Führung für die Schraube 2 geschaffen, die einen Kontakt zwischen dem freien Ende 6 des Schraubenstifts 4 und der Stahlkugel 23 erlaubt. Ferner ist der Innendurchmesser des Kanals 25 kleiner ausgebildet als der Innendurchmesser der Öffnung 11 des Oberteils. Dadurch wird auch im Bereich der Öffnung 11 ein Kontakt zwischen der Elektrode 1 und der Schraube 2 verhindert. Im dargestellten geschlossenen Zustand des Ventils kann die Schraube 2 zur Vorbereitung des Schweißvorgangs in den Kanal 25 der Keramikhülse 24 eingesteckt werden. Das freie Ende 6 ruht in diesem Zustand auf der Stahlkugel 23, ohne sie zu verschieben. Dieser Zustand ist in Figur 1 dargestellt.

Das Unterteil 8 der Elektrode 1 verfügt ferner über eine unterseitige Befestigungseinrichtung 26. Diese dient der Anordnung der Elektrode auf einer nicht gezeigten Halterungsvorrichtung. Über diese Vorrichtung wird die Elektrode 1 an einen Stromkreis angeschlossen.

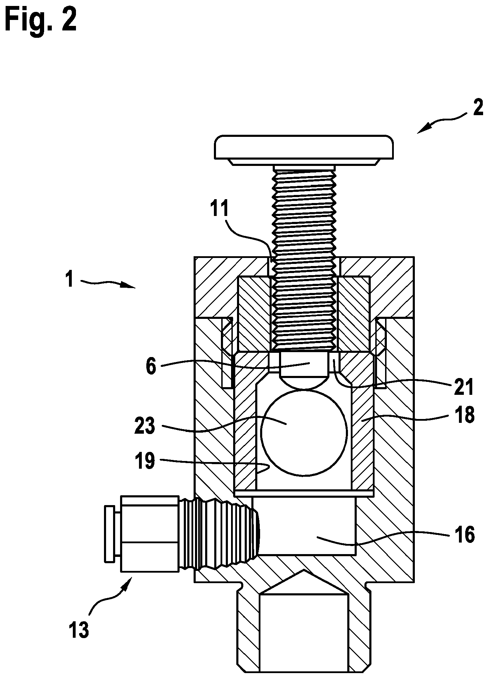

Figur 2 zeigt die Elektrode 1 gemäß Figur 1 im geöffneten Zustand des Ventils. Die Schraube 2 ist durch die Öffnung 11 weiter in die Elektrode 1 hineingeschoben. Hierbei drückt das freie Ende 6 des Schraubenstifts 4 die Stahlkugel 23 aus ihrer Schließposition heraus entlang des Führungsabschnitts 19 entgegen der Strömungsrichtung der Druckluft. Die Druckluft kann nun ausgehend vom Druckluftanschluss 13 durch den freien Abschnitt 16, in die Isolierhülse 18, dort an der Stahlkugel 23 vorbei, durch die Hülsenöffnung 21, weiter durch den Kanal 25 aus der Öffnung 11 zu der in Figur 3 dargestellten Schweißstelle strömen. Damit die Druckluft die Stahlkugel 23 passieren kann, bilden allgemein der Ventilkörper und der Führungsabschnitt einen Luftspalt, durch den die Druckluft strömen kann.

Figur 3 zeigt die Elektrode nach Figur 2 im geöffneten Zustand des Ventils. Zusätzlich zu erkennen sind das Blech 27, mit welchem der Bolzen 2 verschweißt werden soll, sowie eine (stark schematisierte) Oberelektrode 28. Das Blech 27 ist aus Anschauungsgründen in Figur 3 etwas dicker dargestellt, als es in der Realität ist.

Der Schraubenstift 4 ist durch eine Bohrung des Blechs 27 durchgesteckt. Das Blech 27 begrenzt die Einstecktiefe des Bolzens, der in Steckrichtung mit seinem Schraubenkopf 3 zur Auflage auf dem Blech 27 kommt.

Zur Befestigung des als Schraube ausgebildeten Bolzens 2 an dem Blech 27 mittels Widerstandsschweißen wird der Schraubenstift 4 durch das Blech 27 in den Kanal 25 der Keramikhülse 24 eingeführt, bis das freie Ende 6 des Schraubenstiftes in Kontakt mit der Stahlkugel 23 kommt. Sodann wird der Bolzen durch die Oberelektrode 28 weiter in die Elektrode 1 gedrückt, bis der Schraubenkopf 3 auf dem Blech 27 aufliegt und das Blech 27 in Kontakt mit der Elektrodenoberfläche 29 aufliegt. Hierdurch wird der Stromkreis zwischen der Elektrode 1 und der Oberelektrode 28 geschlossen, wodurch der Bolzen 2 und das Blech 27 miteinander verschweißt werden. Gleichzeitig drückt der Bolzen 2 mit seinem freien Ende 6 gegen die Stahlkugel 23 und bewegt sie innerhalb des Führungsabschnitts 19 entgegen der Strömungsrichtung der Druckluft. Dadurch wird das Ventil geöffnet und Druckluft kann an der Stahlkugel 23 vorbei durch die Hülsenöffnung 21 strömen. Die Druckluft wird der Schweißstelle 30 zugeführt. Überschüssiges geschmolzenes Material und Zunder werden durch die Druckluft weggeschleudert.

Nach Beendigung des Schweißvorgangs wird die Oberelektrode 28 nach oben gezogen und das Blech 27 mit dem verschweißten Bolzen von der Elektrode abgehoben. Die Stahlkugel 23 wird durch die Druckluft gegen die Anschlagfläche 22 des umlaufenden Kragens 20 gepresst und verschließt dadurch die Hülsenöffnung 21 luftdicht.

### Bezugszeichenliste

- 1: Elektrode
- 2: Bolzen
- 3: Schraubenkopf
- 4: Schraubenstift
- 5: Gewinde
- 6: freies Ende
- 7: Oberteil
- 8: Unterteil
- 9: Befestigungsabschnitt
- 10: Befestigungsabschnitt
- 11: Öffnung
- 12: Hohlraum
- 13: Druckluftanschluss
- 14: Luftauslass
- 15: Lufteinlass
- 16: freier Abschnitt
- 17: Auflagefläche
- 18: Isolierhülse
- 19: Führungsabschnitt
- 20: Kragen
- 21: Hülsenöffnung
- 22: Anschlagfläche
- 23: Stahlkugel
- 24: Keramikhülse
- 25: Kanal
- 26: Befestigungseinrichtung
- 27: Blech
- 28: Oberelektrode
- 29: Elektrodenoberfläche
- 30: Schweißstelle

### Bezugszeichenliste

- 1: Elektrode
- 2: Bolzen
- 3: Schraubenkopf
- 4: Schraubenstift
- 5: Gewinde
- 6: freies Ende
- 7: Oberteil
- 8: Unterteil
- 9: Befestigungsabschnitt
- 10: Befestigungsabschnitt
- 11: Öffnung
- 12: Hohlraum
- 13: Druckluftanschluss
- 14: Luftauslass
- 15: Lufteinlass
- 16: freier Abschnitt
- 17: Auflagefläche
- 18: Isolierhülse
- 19: Führungsabschnitt
- 20: Kragen
- 21: Hülsenöffnung
- 22: Anschlagfläche
- 23: Stahlkugel
- 24: Keramikhülse
- 25: Kanal
- 26: Befestigungseinrichtung
- 27: Blech
- 28: Oberelektrode
- 29: Elektrodenoberfläche
- 30: Schweißstelle

## Patentansprüche

1. Elektrode zum Widerstandsschweißen von Bolzen (2), mit
- einem Oberteil (7) und einem Unterteil (8),
- welche miteinander verbindbar ausgebildet sind und im verbundenen Zustand gemeinsam einen Hohlraum (12) bereitstellen,
- wobei das Oberteil (7) eine Öffnung (11) zum Einführen eines Bolzens (2) aufweist und das Unterteil (8) einen Gasanschluss (13) für ein unter Druck stehendes Gas aufweist,
- wobei in dem Hohlraum (12) ein Ventilkörper (23) angeordnet ist, durch den die Öffnung (11) strömungstechnisch verschließbar ist,
**dadurch gekennzeichnet,**
- **dass** in dem Hohlraum (12) eine Isolierhülse (18) angeordnet ist, die der Führung des Ventilkörpers (23) dient.

2. Elektrode nach Anspruch 1, **dadurch gekennzeichnet, dass** der Ventilkörper (23) in dem Hohlraum (12) ohne mechanische Vorspannung geführt ist.

3. Elektrode nach Anspruch 1 oder 2, **dadurch gekennzeichnet, dass** der Ventilkörper (23) eine Kugel ist, wobei vorzugsweise die Kugel aus Metall gebildet ist.

4. Elektrode nach einem der Ansprüche 1 bis 3, **dadurch gekennzeichnet, dass** der Gasanschluss (13) und die Öffnung (11) einen Strömungsweg definieren und dass der Ventilkörper (23) in dem Strömungsweg angeordnet ist.

5. Elektrode nach Anspruch 4, durch gekennzeichnet, dass der Strömungsweg durch die Isolierhülse (18) hindurchgeht.

6. Elektrode nach einem der Ansprüche 1 bis 5, **dadurch gekennzeichnet, dass** die Isolierhülse (18) aus Kunststoff gebildet ist.

7. Elektrode nach einem der Ansprüche 1 bis 6, **dadurch gekennzeichnet, dass** die Isolierhülse (18) einen innenliegenden vorzugsweise zylindrischen Führungsabschnitt (19) aufweist.

8. Elektrode nach Anspruch 7, **dadurch gekennzeichnet, dass** die Isolierhülse (18) eine Hülsenöffnung (21) bildet, die einen gegenüber dem Führungsabschnitt (19) verringerten Innendurchmesser aufweist, wobei vorzugsweise die Hülsenöffnung (21) und die Öffnung (11) des Oberteils koaxial angeordnet sind.

9. Elektrode nach einem der Ansprüche 1 bis 8, **dadurch gekennzeichnet, dass** die Isolierhülse (18) innenseitig einen umlaufenden Kragen (20) bereitstellt, der mit dem Ventilkörper (23) zusammenwirkt und der vorzugsweise eine abgeschrägte Anschlagfläche (22) aufweist.

10. Elektrode nach einem der Ansprüche 1 bis 9, **dadurch gekennzeichnet, dass** der Ventilkörper (23) in der Isolierhülse (18) aufgenommen ist.

11. Elektrode nach einem der Ansprüche 1 bis 10, **dadurch gekennzeichnet, dass** in dem Oberteil (7) der Elektrode (1) ein Führungselement (24) zur Aufnahme des Bolzens (2) aufgenommen ist.

12. Elektrode nach Anspruch 11, **dadurch gekennzeichnet, dass** das Führungselement (24) einen vorzugsweise zylindrischen Kanal (25) aufweist, der mit der Öffnung (11) des Oberteils und der Hülsenöffnung (21) fluchtet, wobei vorzugsweise der Innendurchmesser des Kanals (25) kleiner ist als die Öffnung (11) des Oberteils.

13. Elektrode nach Anspruch 11 oder 12, **dadurch gekennzeichnet, dass** das Führungselement (24) eine Keramikhülse ist.

## Claims

1. An electrode for the resistance welding of bolts (2), having
- an upper part (7) and a lower part (8)
- which are configured to be connectable together and, in the connected state, jointly provide a cavity (12),
- the upper part (7) having an opening (11) for introducing a bolt (2), and the lower part (8) having a gas connection (13) for a pressurized gas,
- wherein a valve body (23), by way of which the opening (11) is closable in terms of flow, is arranged in the cavity (12)
**characterized in**
- **that** an insulating sleeve (18) is arranged in the cavity (12) which insulating sleeve serves to guide the valve body (23).

2. The electrode as claimed in claim 1, **characterized in that** the valve body (23) is guided in the cavity (12) without mechanical preloading.

3. The electrode as claimed in claim 1 or 2, **characterized in that** the valve body (23) is a ball which is preferably made of metal.

4. The electrode as claimed in any of claims 1 to 3, **characterized in that** the gas connection (13) and the opening (11) define a flow path, and that the valve body (23) is arranged in the flow path.

5. The electrode as claimed in claim 4, **characterized in that** the flow path passes through the insulating sleeve (18).

6. The electrode as claimed in any of claims 1 to 5, **characterized in that** the insulating sleeve (18) is made of plastic.

7. The electrode as claimed in any of claims 1 to 6, **characterized in that** the insulating sleeve (18) has an internal preferably cylindrical guide portion (19).

8. The electrode as claimed in claim 7, **characterized in that** the insulating sleeve (18) forms a sleeve opening (21) which has a reduced inside diameter compared with the guide portion (19) wherein preferably the sleeve opening (21) and the opening (11) in the upper part are arranged coaxially.

9. The electrode as claimed in any of claims 1 to 8, **characterized in that** the insulating sleeve (18) provides an encircling collar (20) on the inside, which cooperates with the valve body (23) and which preferably has a beveled stop surface (22).

10. The electrode as claimed in any of claims 1 to 9, **characterized in that** the valve body (23) is accommodated in the insulating sleeve (18).

11. The electrode as claimed in any of claims 1 to 10, **characterized in that** a guide element (24) for receiving the bolt (2) is accommodated in the upper part (7) of the electrode (1).

12. The electrode as claimed in claim 11, **characterized in that** the guide element (24) has a preferably cylindrical passage (25) which is aligned with the opening (11) in the upper part and the sleeve opening (21) wherein preferably the inside diameter of the passage (25) is smaller than the opening (11) in the upper part.

13. The electrode as claimed in claim 11 or 12, **characterized in that** the guide element (24) is a ceramic sleeve.

## Revendications

1. Électrode destinée au soudage par résistance de goujon (2), comprenant
- une partie supérieure (7) et une partie inférieure (8),
- lesquelles sont configurées pour pouvoir être reliées l'une à l'autre et, à l'état relié, fournissent ensemble un espace creux (12),
- la partie supérieure (7) possédant une ouverture (11) destinée à l'introduction d'un goujon (2) et la partie inférieure (8) possédant un raccord à gaz (13) pour un gaz sous pression,
- un corps de clapet (23) étant disposé dans l'espace creux (12), par lequel l'ouverture (11) peut être fermée fluidiquement,
**caractérisée en ce**
- **qu'**une douille isolante (18) qui sert au guidage du corps de clapet (23) est disposée dans l'espace creux (12).

2. Électrode selon la revendication 1, **caractérisée en ce que** le corps de clapet (23) est guidé dans l'espace creux (12) sans précontrainte mécanique.

3. Électrode selon la revendication 1 ou 2, **caractérisée en ce que** le corps de clapet (23) est une bille, la bille étant de préférence constituée de métal.

4. Électrode selon l'une des revendications 1 à 3, **caractérisée en ce que** le raccord à gaz (13) et l'ouverture (11) définissent un trajet d'écoulement et **en ce que** le corps de clapet (23) est disposé dans le trajet d'écoulement.

5. Électrode selon la revendication 4, **caractérisée en ce que** le trajet d'écoulement traverse la douille isolante (18).

6. Électrode selon l'une des revendications 1 à 5, **caractérisée en ce que** la douille isolante (18) est constituée de matière plastique.

7. Électrode selon l'une des revendications 1 à 6, **caractérisée en ce que** la douille isolante (18) possède une portion de guidage (19) intérieure, de préférence cylindrique.

8. Électrode selon la revendication 7, **caractérisée en ce que** la douille isolante (18) forme une ouverture de douille (21) qui possède un diamètre plus petit par rapport à la portion de guidage (19), l'ouverture de douille (21) et l'ouverture (11) de la partie supérieure étant de préférence disposées de manière coaxiale.

9. Électrode selon l'une des revendications 1 à 8, **caractérisée en ce que** la douille isolante (18) met à disposition du côté intérieur une collerette (20) circonférentielle qui coopère avec le corps de clapet (23) et qui présente de préférence une surface de butée (22) biseautée.

10. Électrode selon l'une des revendications 1 à 9, **caractérisée en ce que** le corps de clapet (23) est logé dans la douille isolante (18).

11. Électrode selon l'une des revendications 1 à 10, **caractérisée en ce qu'**un élément de guidage (24) destiné à accueillir le goujon (2) est logé dans la partie supérieure (7) de l'électrode (1).

12. Électrode selon la revendication 11, **caractérisée en ce que** l'élément de guidage (24) possède un canal (25) de préférence cylindrique qui est aligné avec l'ouverture (11) de la partie supérieure et l'ouverture de douille (21), le diamètre intérieur du canal (25) étant de préférence inférieur à l'ouverture (11) de la partie supérieure.

13. Électrode selon la revendication 11 ou 12, **caractérisée en ce que** l'élément de guidage (24) est une douille en céramique.
